# NEUE EUROPÄISCHE PATENTSCHRIFT

(11) **EP 1 328 918 B2**
(45) Veröffentlichungstag und Bekanntmachung des Hinweises auf die Entscheidung über den Einspruch: **16.12.2009**
(45) Hinweis auf die Patenterteilung: 19.05.2004
(21) Anmeldenummer: 01988913.8
(22) Anmeldetag: 10.10.2001
(51) Int. Cl.: G09F 27/00

(54) **MULTIFUNKTIONALES KARTENTERMINAL**
MULTIFUNCTIONAL CARD TERMINAL
TERMINAL POUR CARTES MULTIFONCTIONNEL

(30) Priorität: 24.10.2000 DE 10052813
(43) Veröffentlichungstag der Anmeldung: 23.07.2003
(73) Patentinhaber: Interflex Datensysteme GmbH & Co. KG., D-70567 Stuttgart (DE)
(72) Erfinder: REISSER, Thomas, 70186 Stuttgart (DE)
(74) Vertreter: Jakelski, Joachim
(86) Internationale Anmeldenummer: PCT/DE2001/003867
(87) Internationale Veröffentlichungsnummer: WO 2002/035451

(56) Entgegenhaltungen:
- EP-A- 0 116 970
- WO-A-99/37082
- WO-A-99/37082
- DE-A- 19 635 610
- DE-A- 19 635 610
- DE-A- 19 809 097
- DE-A- 19 809 097
- GB-A- 2 319 747

## Beschreibung

Die vorliegende Erfindung betrifft ein Kartenlesegerät gemäß dem Oberbegriff des Anspruchs 1.

Kartenlesegeräte oder Kartenterminals der eingangs genannten Art dienen meist dazu, Informationen von einem kartenförmigen Informationsträger zu lesen oder auf diesen zu schreiben. Diese Geräte weisen bekanntermaßen eine Kartenleseeinheit auf, mittels der eine Karte, z.B. eine Magnetstreifenkarte oder eine Chipkarte oder dergleichen, in das Gerät eingeführt und von dem Gerät gelesen und ggf. beschrieben werden kann.

Bei der Bedienung dieser Kartenterminals kommt es häufig vor, dass sich eine mehr oder weniger lange Personenschlange vor dem Gerät bildet und die Wartezeiten der Personen nutzlos verstreichen.

Aus dem Document DE-A-19809097 geht ein Kartentelefonapparat hervor, wobei Werbeinformation durch das Einschieben der Telefonkarte angezeigt wird, und wobei der Telefonapparat zusätzlich Gegenkontakte aufweist, welche das Einschieben der Karte als Schaltelement zur Aktivierung der Anzeigeeinheit dienen.

Der Erfindung liegt daher die Aufgabe zugrunde, ein Kartenlesegerät der eingangs beschriebenen Art anzugeben, welches die genannten Nachteile vermeidet und die Wartezeiten möglichst nutzbringend einsetzt.

Die Aufgabe wird gelöst durch die Merkmale der unabhängigen Ansprüche. Vorteilhafte Ausgestaltungen sind in den Unteransprüchen angeführt. Zur Lösung der Aufgabe schlägt die Erfindung vor, dass die Anzeigeeinheit bei Einschieben einer Karte auf der Karte gespeicherte personenbezogenen Informationen ausgewählte Daten anzeigt.

Der Erfindung liegt der Gedanke zugrunde, die an Kartenlesegeräten der hier betroffenen Art oft auftretenden Wartezeiten für Werbemaßnahmen dadurch zu nutzen, dass an dem Kartenlesegerät zusätzlich ein Werbeträger vorgesehen wird, der durch Einschieben oder Einlesen einer Karte aktiviert wird. Durch eine möglichst großflächige Anzeige von Werbefilmen bzw. Werbespots oder von auswechsenbaren Folienpostern, welche auch durch in einer Schlange stehende Personen gut erkennbar sind, läßt sich der Werbeeffekt zusätzlich erhöhen. Um die Erkennbarkeit der gezeigten Werbung weiter zu erhöhen, weist die Anzeigeeinheit bevorzugt eine, neben der zwingend vorhandenen Kartenleseeinheit, die zur Verfügung stehende Gehäusefläche möglichst großflächig ausnutzende Anzeigeeinheit auf.

Die Anzeigeeinheit befindet sich zum Zwecke einer Energieeinsparung bevorzugt bei Nichtbenutzung in einem Schlafmodus. Zum Übergang in einen Betriebsmodus, d.h. zur Aktivierung der Anzeigeeinheit, ist bevorzugt ein Schaltelement vorgesehen, welches mit einer Sensorik zur Erfassung der Einführung einer Karte in die Kartenleseeinheit zusammenarbeitet.

Ferner kann vorgesehen sein, dass die Anzeigeeinheit bei jedem Einschieben einer Karte eine neue Werbeinformation oder bei mehrmaligem Einschieben einer Karte eine bestimmte Werbeinformation anzeigt.

Dabei können bei einer vorteilhaften Ausführungsform auch personenbezogene Informationen zur Anzeige gebracht werden.

Gemäß einem weiteren Ausführungsbeispiel weist das Kartenlesegerät eine Montagehöhe auf, in der eine Person mühelos die Karte in die Kartenleseeinheit einführen kann.

Diese Montagehöhe beträgt in der Regel etwa zwei Drittel der durchschnittlichen Körpergröße von Personen. Um die Erkennbarkeit der Anzeigeeinheit unter den genannten Bedingungen zu verbessern, weist das Kartenlesegerät ein wenigstens zwei nach unten gegeneinander angewinkelt angeordnete Seiten aufweisendes Gehäuse auf. Bei einem Winkel im Bereich von 60 bis 90 Grad, bevorzugt etwa 75 Grad, ist gewährleistet, dass eine in einem typischen Arbeitsabstand und/oder einem Vielfachen dieses Abstandes vor dem Kartenlesegerät stehende Person die Anzeigeeinheit noch deutlich einsehen kann.

Gemäß einem weiteren Ausführungsbeispiel sind die beiden Seiten durch eine durchgehende Materiallage gebildet, welche am Übergang zwischen den beiden Gehäuseseiten um den genannten Winkel stumpf oder spitz gebogen ist. Hierdurch wird die Herstellbarkeit des Gerätegehäuses erheblich vereinfacht.

Um ein einzelnes Kartenterminal in beiden Durchgangsrichtungen nutzbar zu machen, kann ferner vorgesehen sein, dass auf beiden Seiten jeweils eine Anzeigeeinheit und jeweils eine Kartenleseeinheit angeordnet sind.

Die Anzeigeeinheit weist bevorzugt ein integriertes Flachdisplay zur Darstellung bewegter insbesondere visueller oder audio-visueller Informationen und/oder eine Halterung für auswechselbare Folienposter zur statischen Darstellung von Bildinformationen auf.

Zusätzlich kann vorgesehen sein, dass das Kartenterminal im Bereich des Übergangs zwischen den beiden Gehäuseseiten ein Statusanzeigeelement und/oder eine weitere Anzeigeeinheit zur Darstellung von Statusinformationen betreffend den jeweiligen Betriebsstatus der Kartenleseeinheit oder dergleichen bereitstellt.

Der erfindungsmäße Kartenleser ist sowohl bei Eintrittskartenkontrollen, Personenzugangskontrollen von Firmenoder Stadioneingängen oder dergleichen, z.B. im Bereich von Drehkreuzen, Trennwänden oder Türeingängen, als auch bei Bank- oder Kassenautomaten oder dergleichen vorteilhaft einsetzbar.

Es ist anzumerken, dass das erfindungsgemäße Kartenterminal sowohl den Vorgang des Auslesens als auch des Schreibens von Informationen von bzw. auf die (der) Karte umfasst. Auch versteht sich, dass das vorgeschlagene Kartenterminal für das Ein- bzw. Auslesen variabler Kartenformate wie beispielsweise kreditkartenähnlicher Chipoder Magnetstreifenkarten oder papierstreifenförmiger Eintrittskarten oder dergleichen geeignet ist. Zudem können auf beliebige Weise kodierte Karten ein- bzw. ausgelesen werden.

Die Erfindung wird nachfolgend anhand von Ausführungsbeispielen eingehender beschrieben, wobei gleiche oder funktional gleiche Merkmale mit identischen Bezugszahlen versehen sind.

Im Einzelnen zeigen
- Fig. 1a, b: eine Seitenansicht und eine Draufsicht eines Ausführungsbeispiels des erfindungsgemäßen Kartenlesegerätes;
- Fig. 2: eine seitliche Schnittansicht des in Fig. 1 gezeigten Kartenlesegerätes;
- Fig. 3a, b: zwei Ausführungsbeispiele einer Anzeigeeinheit gemäß der Erfindung in einer Frontansicht; und
- Fig. 4a, b: zwei Montagebeispiele des erfindungsgemäßen Kartenlesegerätes.

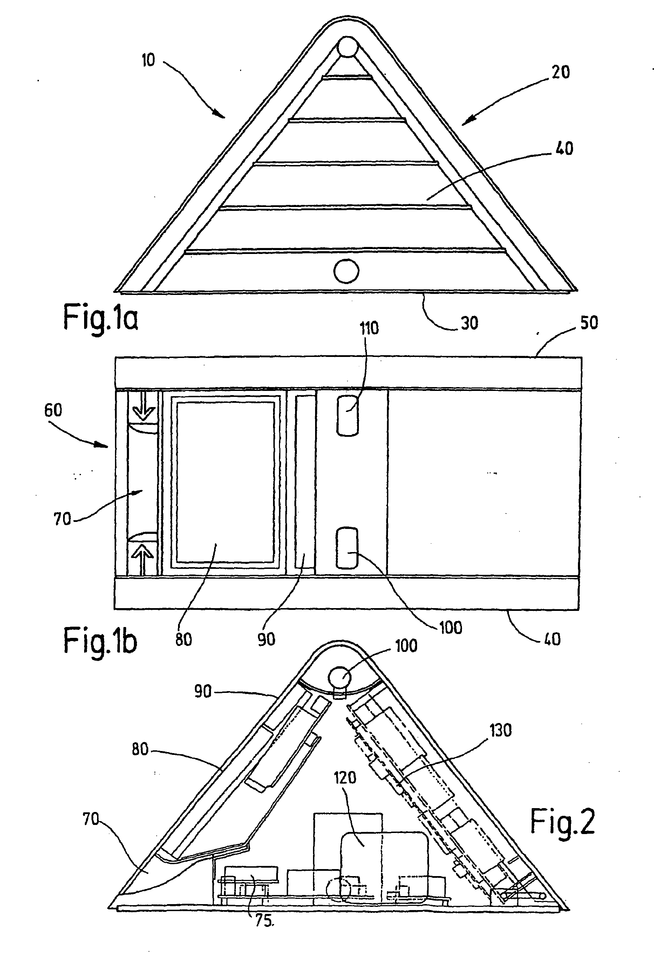

Das in der Fig. 1a in einer Seitenansicht dargestellte Kartenlesegerät weist zwei gegeneinander angewinkelte Gehäuseseiten 10, 20, eine Grundplatte 30 sowie zwei Gehäuseseitenflächen 40, 50, von denen in dieser Darstellung nur eine zu ersehen ist, auf. Die Gehäuseseiten 10, 20 sind aus einer umlaufenden, abgekanteten und 1 bis 5 mm dicken (bevorzugt 3 mm) Acrylglasplatte gebildet, wobei der Winkel zwischen den beiden Gehäuseseiten 10, 20 in dem Ausführungsbeispiel 75 Grad beträgt. Das gesamte Gehäuseoberteil 10, 20, 40, 50 ist verschwenkbar angeordnet, wodurch die in dem Gehäuse 10 - 50 angeordneten Funktionskomponenten, insbesondere zu Wartungsarbeiten, leicht zugänglich sind.

Aus der Fig. 2a ist zu ersehen, dass in dem Beispiel nur die Gehäuseseite 10 eine Kartenleseeinheit 60 mit zugehörigem Karteneinführschlitz 70 sowie zwei Anzeigeeinheiten 80, 90 aufweist. Die Rückseite 20 ist in dem Beispiel dagegen passiv ausgebildet, d.h. sie weist keine der genannten Funktionseinheiten 60 - 90 auf. Es ist hierbei jedoch anzumerken, dass auch die Gehäuserückseite 20 eine (nicht gezeigte) Kartenleseeinheit, eine Anzeigeeinheit 80 und ggf. weitere der genannten Funktionseinheiten aufweisen kann, um das Kartenterminal in beiden Durchgangsrichtungen beispielsweise eines Drehkreuzes verwenden zu können.

Die relativ großflächig ausgeführte Anzeigeeinheit 80 weist in dem Beispiel eine farbige Flüssigkristallanzeige (LCD-Display) auf, mittels der kurze Werbefilme oder Fotos bzw. kurze Fotoserien angezeigt werden können. In dem Beispiel ist die Anzeigeeinheit 80 allerdings ,AUS'geschaltet. Selbstverständlich kommen hier auch andere Flachdisplay-Technologien wie beispielsweise Polymerdisplays (OLEDs) oder dergleichen in Betracht. Anstelle des LCD-Displays kann allerdings auch eine Durchlicht- oder Auflichteinheit vorgesehen sein, mittels der Folienposter oder dergleichen statisch angezeigt werden können.

Die oberhalb der ersten Anzeigeeinheit 80 angeordnete und wesentlich kleiner bzw. schmaler ausgebildete zweite Anzeigeeinheit 90 weist in dem Beispiel ein monochromes LCD-Flachdisplay auf, welches zur Anzeige von Statusinformationen der Kartenleseeinheit dient. In dem Beispiel zeigt die Anzeigeeinheit 90 an, dass der Durchgang freigeschaltet ist und die jeweilige Person die Karte entnehmen kann.

Aus der in Fig. 2 gezeigten seitlichen Schnittzeichnung des in Fig. 1a, b dargestellten Kartenterminals werden die in dem Gerät vorgesehen Komponenten deutlich, von denen allerdings nur die für die vorliegende Erfindung bedeutsamen Komponenten nachfolgend beschrieben werden. Im Bereich der Kartenleseeinheit befindet sich eine Karteneinzugsmimik 75 zum automatischen Einzug (und ggf. Ausgabe) der Karte und zum Auslesen von auf der Karte enthaltenen Informationen. Das Auslesen erfolgt, je nach Kartentyp, entweder optisch, elektrisch oder mittels einer hier nicht gezeigten Datenverarbeitung mittels bekannter Techniken. Die Karteneinzugsmimik 75 enthält eine (nicht gezeigte) Sensorik, welche den Einzug einer Karte feststellt und diese Information einem (nicht gezeigten) Schalter zuführt. Der Schalter wiederum steht in Verbindung mit den beiden Anzeigeeinheiten 80, 90 und aktiviert wenigstens einer der beiden Anzeigeeinheiten, sobald festgestellt wird, dass eine Karte eingeschoben bzw. eingezogen wurde. Im Bereich der Gehäusespitze sind zwei Signallampen 100, 110 unterschiedlicher Farbgebung (z.B. rot und grün) angeordnet mittels derer der Kartenlesestatus zusätzlich durch entsprechende Signale angezeigt wird. Dies ermöglicht eine ergonomisch eindeutige Signalisierung des Lesezustandes der Kartenleseeinheit. Ferner ist in dem Gehäuse eine übliche Niedervolt-Spannungsversorgung 120 angeordnet. Die gesamte für die vorbeschriebenen Funktionen erforderliche Steuerelektronik ist auf einer Platine 130 untergebracht.

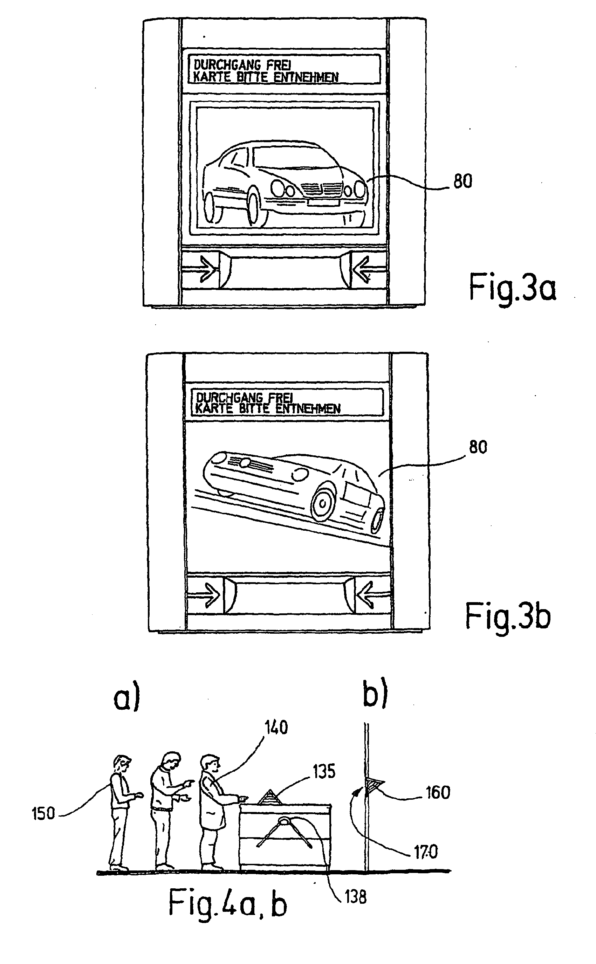

Die Figuren 3a und 3b zeigen die oben bereits angesprochenen zwei Ausführungsformen der Anzeigeeinheit 80 in Frontansicht. Fig. 3a zeigt ein farbiges LCD-Display, mittels dessen kurze Werbespots eingespielt werden können, und Fig. 3b eine Durchlichteinheit, mittels der Folienposter, ggf. im zeitlichen Wechsel, angezeigt werden können.

Die Figuren 4a und 4b zeigen abschließend zwei Montagebeispiele eines erfindungsgemäßen Kartenterminals 135, 160. Im Beispiel a. ist das Kartenlesegerät 135 an seiner Grundplatte 30 im Bereich eines Drehkreuzes 138 angebracht. Aufgrund der vorgenannten Anwinkelung der oberen Gehäuseflächen 10, 20 kann die Anzeigeeinheit 80 sowohl von der Person 140 als auch von der noch in der Schlange befindlichen Person 150 gut eingesehen werden, so dass der Werbeeffekt bei beiden Personen 140, 150 wirksam eintritt. In Fig. 4b ist das Kartenlesegerät 160 an einer senkrechten Absperrwand montiert, wobei es von der Seite 170 für den bestimmungsgemäßen Betrieb zugänglich ist. Diese Ausführungsbeispiele verdeutlichen den weitgehenden Einsatzbereich des erfindungsgemäßen Kartenterminals.

## Patentansprüche

1. Kartenlesegerät mit wenigstens einer Kartenleseeinheit (60 - 75) und mit wenigstens einer Anzeigeeinheit (80) zur Anzeige von Informationen, wobei die wenigstens eine Anzeigeeinheit (80) durch das Einschieben oder das Einlesen einer Karte initiiert Werbeinformationen anzeigt, **dadurch gekennzeichnet, dass** die Anzeigeeinheit (80) bei Einschieben einer Karte auf der Karte gespeicherte personenbezogene Informationen und/oder in Abhängigkeit von personenbezogenen Informationen ausgewählte Daten anzeigt.

2. Kartenlesegerät nach Anspruch 1, **gekennzeichnet durch** ein Schalt- oder Triggerelement zur Aktivierung der Anzeigeeinheit (80) in Abhängigkeit von dem Einschieben oder Einlesen einer Karte.

3. Kartenlesegerät nach Anspruch 2, **gekennzeichnet durch** eine mit dem Schaltelement verbundene Sensorik zur Erfassung der Einführung einer Karte in die Kartenleseeinheit (60 - 75).

4. Kartenlesegerät nach einem der vorhergehenden Ansprüche, **dadurch gekennzeichnet, dass** die Anzeigeeinheit (80) bei jedem Einschieben einer Karte eine neue Werbeinformation oder bei mehrmaligem Einschieben einer Karte eine bestimmte Werbeinformation anzeigt.

5. Kartenlesegerät nach einem der vorhergehenden Ansprüche, **gekennzeichnet durch** ein wenigstens zwei nach unten gegeneinander angewinkelt angeordnete Seiten (10, 20) aufweisendes Gehäuse.

6. Kartenlesegerät nach Anspruch 5, **dadurch gekennzeichnet, dass** der Winkel im Bereich von 60 bis 90 Grad, bevorzugt etwa 75 Grad, beträgt.

7. Kartenlesegerät nach Anspruch 5 oder 6, **dadurch gekennzeichnet, dass** die beiden Seiten (10, 20) durch eine durchgehende Materiallage, insbesondere aus Acrylglas der Dicke im Bereich von 1 bis 5 mm, gebildet sind, welches am Übergang zwischen den beiden Seiten stumpf oder spitz abgekantet ist.

8. Kartenlesegerät nach einem der Ansprüche 5 bis 7, **dadurch gekennzeichnet, dass** auf beiden Seiten (10, 20) jeweils eine Anzeigeeinheit (80) und jeweils eine Kartenleseeinheit (60 - 75) angeordnet sind.

9. Kartenlesegerät nach einem der vorhergehenden Ansprüche, **dadurch gekennzeichnet, dass** die wenigstens eine Anzeigeeinheit (80) ein integriertes Flachdisplay zur Darstellung bewegter Informationen und/oder eine Durchlicht- oder Auflichteinheit für auswechselbare Folienposter zur statischen Darstellung von Informationen aufweist.

10. Kartenlesegerät nach einem der Ansprüche 5 bis 9, **gekennzeichnet durch** ein im Bereich des Übergangs zwischen den beiden Seiten angeordnetes Statusanzeigeelement (100, 110) und/oder eine wenigstens dritte Anzeigeeinheit (90) zur Darstellung von Statusinformationen.

## Claims

1. A card-reading device-comprising at least one card-reading unlit (60 to 75) and at least one display unit (80) for displaying information, wherein the at least one display unit (80) displays advertising information this action being initiated by the insertion or reading-in of a card, **characterized in that** when a card is inserted the display unit (80) displays personal information stored in the card and/or data selected in a manner dependent upon personal information.

2. A card-reading device according to Claim 1, **characterized by** a switching or trigger element which activates the display unit (80) in a manner dependent upon the insertion or reading-in of a card.

3. A card-reading device according to Claim 2, **characterized by** a sensor system which is connected to the switching element and intended to detect the introduction of a card into the card-reading unit (60 to 75).

4. A card-reading device according to one of the preceding Claims, **characterized in that** the display unit (80) displays new advertising information every time a card is inserted, or a specific item of advertising information when a card is inserted several times.

5. A card-reading device according to one of the preceding Claims, **characterized by** a housing comprising at least two sides (10, 20) angled downwards relative to each other.

6. A card-reading device according to Claim 5, **characterized in that** the angle is in the range of from 60 to 90 degrees, preferably approximately 75 degrees.

7. A card-reading device according to Claim 5 or 6, **characterized in that** the two sides (10, 20) are formed from a continuous sheet of material, in particular from plexiglass, having a thickness in the range of from 1 to 5 mm, which is bent in the transition area between the two sides at an obtuse angle or an acute angle.

8. A card-reading device according to one of Claims 5 to 7, **characterized in that** a display unit (80) and a card-reading unit (60 to 75) are arranged on each of the two sides (10, 20).

9. A card-reading device according to one of the preceding Claims, **characterized in that** the at least one display unit (80) comprises an integrated flat display for the display of moving information, and/or a back light or a direct light unit for exchangeable film-material posters, for the static display of information.

10. A card-reading device according to one of Claims 5 to 9, **characterized by** a status display element (100, 110) arranged in the area of transition between the two sides and/or an at least third display unit (90) for the display of status information.

## Revendications

1. Lecteur de cartes comportant au moins une unité de lecture de cartes (60 à 75) et au moins une unité d'affichage (80) pour l'affichage d'informations, l'unité d'affichage (80) affichant des informations publicitaires initiées par l'introduction ou la lecture d'une carte,
**caractérisé en ce qu'**
à l'introduction d'une carte, l'unité d'affichage (80) affiche des informations relatives à une personne, stockées sur la carte, et/ou des données sélectionnées en fonction des informations relatives à une personne.

2. Lecteur de cartes selon la revendication 1,
**caractérisé par**
un élément de commutation ou de déclenchement pour l'activation de l'unité d'affichage (80) en fonction de l'introduction ou de la lecture d'une carte.

3. Lecteur de cartes selon la revendication 2,
**caractérisé par**
un équipement capteur relié à l'élément de commutation pour la détection de l'introduction d'une carte dans l'unité de lecture de carte (60 à 75).

4. Lecteur de cartes selon l'une quelconque des revendications précédentes,
**caractérisé en ce que**
l'unité d'affichage (80) affiche à chaque introduction d'une carte une nouvelle information publicitaire ou, lors de l'introduction multiple d'une carte, une certaine information publicitaire.

5. Lecteur de cartes selon l'une quelconque des revendications précédentes,
**caractérisé par**
un boîtier présentant au moins deux côtés (10, 20) disposés de façon coudée l'un vers l'autre, vers le bas.

6. Lecteur de cartes selon la revendication 5,
**caractérisé en ce que**
l'angle se situe dans l'intervalle de 60 à 90 degrés, de préférence environ 75 degrés.

7. Lecteur de cartes selon la revendication 5 ou 6,
**caractérisé en ce que**
les deux côtés (10, 20) sont formés par une couche de matériau continue, en particulier de verre acrylique, d'une épaisseur du domaine des 1 à 5 mm, dont les angles sont cassés de façon émoussée ou pointue à la transition entre les deux côtés.

8. Lecteur de cartes selon l'une quelconque des revendications 5 à 7,
**caractérisé en ce que**
sur les deux côtés (10, 20), chaque fois une unité d'affichage (80) et chaque fois une unité de lecture de cartes (60 à 75) sont disposées.

9. Lecteur de cartes selon l'une quelconque des revendications précédentes,
**caractérisé en ce que**
l'une unité d'affichage (80) au moins présente un afficheur plat intégré pour la représentation d'informations animées et/ou une unité d'éclairage par transparence ou par incidence pour des affiches sur film interchangeables pour la représentation statique d'informations.

10. Lecteur de cartes selon l'une quelconque des revendications 5 à 9,
**caractérisé par**
un élément d'affichage d'état (100, 110) disposé dans la zone de la transition entre les deux côtés et/ou au moins une troisième unité d'affichage (90) pour la représentation d'informations d'état.
